# EUROPEAN PATENT APPLICATION

(11) **EP 4 607 482 A1**
(43) Date of publication of application: **27.08.2025**
(21) Application number: 25158569.1
(22) Date of filing: 18.02.2025
(51) Int. Cl.: G07C 9/00, B60R 16/037

(54) **VEHICLE SETTINGS USING SIGNALS OF A SIGNAL CATALOG**

(30) Priority: 23.02.2024 US 202463557090 P; 22.11.2024 US 202418956128
(71) Applicant: BlackBerry Limited, Waterloo, Ontario N2K 0A7 (CA)
(72) Inventor: SPERANZA, Roberto, Waterloo, N2K 0A7 (CA)
(74) Representative: MERH-IP Matias Erny Reichl Hoffmann Patentanwälte PartG mbB

(57) **Abstract**

In some examples, a system stores, in a memory, a signal catalog defining a vehicle signal representing a characteristic of a vehicle occupant in the vehicle. The system receives the vehicle signal defined by the signal catalog, the vehicle signal being based on measurement data from one or more sensors of the vehicle, and the system updates a preference setting of actuatable components of the vehicle based on the vehicle signal representing the characteristic of the vehicle occupant.

## Description

### Cross-Reference to Related Application

This application claims the benefit under 35 U.S.C. § 119(e) of U.S Provisional Application No. 63/557,090, entitled "Vehicle Settings Using Signals of a Signal Catalog," filed February 23, 2024 (Attorney Docket No. 51183-US-PRV), which is hereby incorporated by reference in its entirety.

### Background

A vehicle can include various electronic components that are able to perform respective tasks. Examples of electronic components include controllers and sensors. Programs can also execute in the vehicle. Examples of programs include synthetic sensors, application programs, and other types of programs.

### Brief Description of the Drawings

Some implementations of the present disclosure are described with respect to the following figures.
FIG. 1 is a block diagram of an example arrangement that includes a vehicle according to some implementations of the present disclosure.
FIG. 2 is a block diagram of producing a custom signal catalog according to some implementations of the present disclosure.
FIG. 3 is a block diagram of a custom signal catalog according to some implementations of the present disclosure.
FIG. 4 is a flow diagram of a process according to some implementations of the present disclosure.
FIG. 5 is a block diagram of a system according to some implementations of the present disclosure.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### Detailed Description

Vehicle signals used for communications in a vehicle can be according to a signaling protocol, such as the Vehicle Signal Specification (VSS) from the COnnected VEhicle Systems Alliance (COVESA). VSS provides a signal catalog (referred to as a "VSS catalog") that represents various features of vehicles, including components, actuators, sensors, and attributes. The VSS catalog is a hierarchical representation that includes nodes (arranged in a hierarchical form) representing respective features of vehicles. For example, the nodes of the VSS catalog can include a branch node, an actuator node, a sensor node, and an attribute node. A branch node represents a group of nodes, an actuator node represents read and write signals (such as read and write signals obtained from or sent to an actuator of a vehicle), a sensor node represents a read-only signal (such as a signal obtained from a sensor), and an attribute node represents an attribute whose value typically is not changed more than once per ignition cycle.

Although reference is made to VSS in some examples, it is noted that techniques or mechanisms according to some implementations can be applied with other types of signal catalogs for vehicles.

A VSS catalog may not define certain vehicle signals that may be useful for operations associated with a vehicle. Note that different vehicle models from one or more vehicle manufacturers may include different sets of vehicle features. As new vehicle features are introduced in newly developed vehicles, the collection of vehicle signals defined by a VSS catalog may be inadequate to support or use such new vehicle features.

Some examples of vehicle signals that may be missing from a VSS catalog include vehicle signals related to any or some combination of the following: a face identifier vehicle signal relating to an identifier based on a face recognition of a vehicle occupant (driver or passenger) in the vehicle; a mood vehicle signal relating to a mood of a vehicle occupant; a face identifier deletion vehicle signal relating to deletion of an identifier based on a face recognition of a vehicle occupant; a vehicle signal relating to an age of a vehicle occupant; a vehicle signal relating to a mood of a vehicle occupant; a vehicle signal relating to a reminder that an item was left behind in the vehicle by a vehicle occupant; a pedestrian vehicle signal that relates to a presence of pedestrian proximate the vehicle; a vehicle signal relating to a central lock of the vehicle; a vehicle signal relating to a massage feature of a seat of the vehicle; a vehicle signal relating to a backlight intensity of a user interface display of the vehicle; a vehicle signal relating to an auto flip feature of a rearview mirror of the vehicle; a vehicle signal relating to a transparency of a sunroof of the vehicle; a vehicle signal relating to a color of an ambient light of the vehicle; a vehicle signal relating to a media application program; a vehicle signal relating to a media playlist for the media application program; an air quality vehicle signal relating to an air quality associated with the vehicle (e.g., air quality inside the vehicle, or air quality outside the vehicle, or both); a vehicle signal relating to a heating, ventilation, and air conditioning (HVAC) setting of the vehicle; or a vehicle signal relating to a fragrance of the vehicle.

In the ensuing discussion, any or some combination of the foregoing signals are referred to as "custom vehicle signals." Note that there may be additional or alternative custom vehicle signals in further examples.

In accordance with some implementations of the present disclosure, a custom signal catalog is defined that includes custom vehicle signals (including any or some combination of the foregoing vehicle signals) not present in an initial signal catalog. The initial signal catalog can refer to a signal catalog that conforms to a version of a signaling protocol, such as the VSS protocol. The custom vehicle signals can be added using one or more separate update data structures, such as overlay files according to the VSS protocol. The overlay files allow new vehicle signals to be added without changing the data structure(s), such as file(s), of the initial signal catalog.

Techniques or mechanisms according to some examples that make use of the custom signal catalog can improve the relevant technology of operating vehicles. For example, vehicle operation is improved by updating preference settings and controlling actuatable components of the vehicle.

Note that although the custom vehicle signals may not be defined by a given version of a signaling protocol, such as the VSS protocol, one or more of the custom vehicle signals may be added to a later version of the signaling protocol.

Examples of vehicles include motor vehicles (e.g., automobiles, cars, trucks, buses, motorcycles, etc.), aircraft (e.g., airplanes, unmanned aerial vehicles, unmanned aircraft systems, drones, helicopters, etc.), spacecraft (e.g., space planes, space shuttles, space capsules, space stations, satellites, rockets, etc.), watercraft (e.g., ships, boats, hovercraft, submarines, etc.), railed vehicles (e.g., trains and trams, etc.), or other types of vehicles including any combinations of any of the foregoing, whether currently existing or after arising.

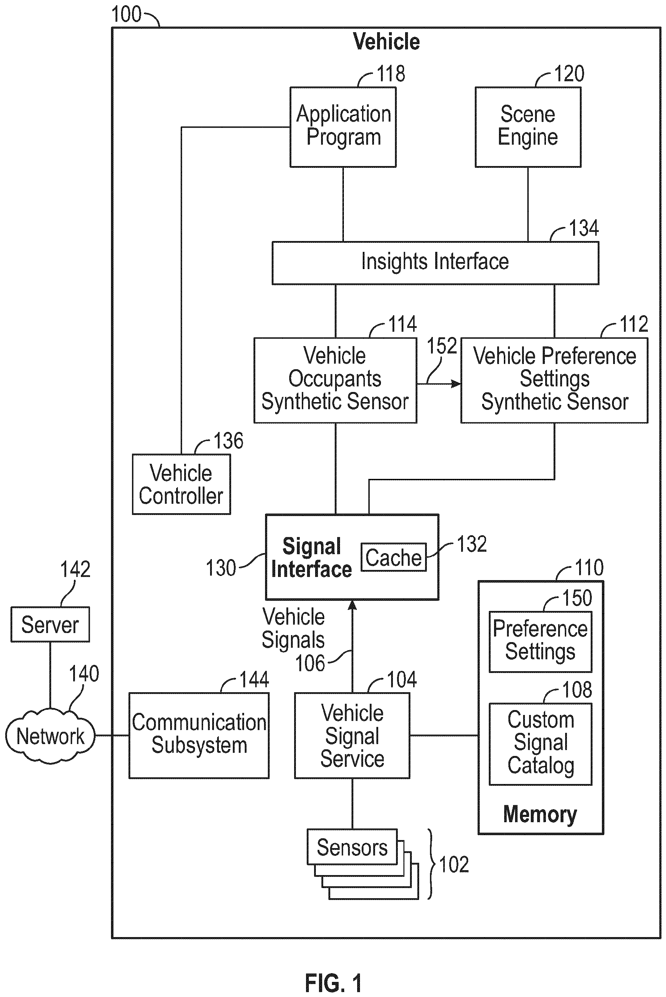

FIG. 1 is a block diagram of an example vehicle 100 that includes various components. The vehicle 100 includes sensors 102, which can include hardware sensors or software sensors, or both hardware and software sensors. Examples of hardware sensors include air quality sensors (e.g., sensors that are able to detect particulate matter in an environment), temperature sensors, pressure sensors, humidity sensors, speed sensors, acceleration sensors, a seat sensor (e.g., a weight sensor) that can detect presence of a vehicle occupant on a vehicle seat, a time clock, or other types of physical sensors. Examples of software sensors include monitoring agents that can monitor data of a subsystem in the vehicle, such as a monitoring agent in an HVAC system; a monitoring agent in a navigation system; a monitoring agent in a fragrance dispensing system; a facial recognition system; a monitoring agent in an article detection system that detects articles in the vehicle; a monitoring agent in a pedestrian detection system to detect a pedestrian proximate the vehicle; a monitoring agent in a human interface system; a monitoring agent in a seat control system that can control positions of a seat and other seat features, such as a massage feature; a monitoring agent in a rearview mirror control system; a monitoring agent in a sunroof control system; a monitoring agent in a vehicle ambient light control system; a monitoring agent of a media control system that plays media such as music; a monitoring agent in a driver assistance system, such as an advanced driver assistance system (ADAS); a monitoring agent in a vehicle controller; or any other type of software sensor.

A sensor (a hardware sensor or a software sensor) is able to acquire measurement data that includes values of one or more metrics. Some of the sensors 102 may be coupled to one or more buses in the vehicle (not shown). An example of a bus in a vehicle includes a controller area network (CAN) bus. In other examples, other types of communication links can be employed. Communication links can include physical links, including wired or wireless links. Communication links can also include inter-process links over which programs can communicate with one another.

Measurement data from the sensors 102 are provided to a vehicle signal service 104, which includes machine-readable instructions to derive vehicle signals 106 based on the measurement data from the sensors 102. Note that there may be one or more additional components between the sensors 102 and the vehicle signal service 104. The vehicle signals 106 derived by the vehicle signal service 104 are defined by a custom signal catalog 108 stored in a memory 110 of the vehicle 100. In some examples, the vehicle signal service 104 may include signal handlers that can operate on incoming measurement data from the sensors 102 to apply transformations or other operations on the measurement data from the sensors 102 to produce the vehicle signals 106.

The vehicle signals 106 may be provided to a signal interface 130 that includes a cache memory 132 to store the vehicle signals 106. Note that the signal interface 130 may be implemented with hardware or software, and the cache memory 132 may be a hardware cache memory or a software cache memory.

The vehicle signals 106 stored in the cache memory 132 are accessible by synthetic sensors 112 and 114 that execute in the vehicle 100. A synthetic sensor is implemented as a program (including machine-readable instructions). The synthetic sensor is able to apply computations on vehicle signals 106 to produce outputs. The synthetic sensors 112 and 114 may operate on respective different subsets of vehicle signals 106. Although two synthetic sensors are depicted in FIG. 1, in other examples, a different quantity (one or more) of synthetic sensors can be employed.

The synthetic sensor 112 is a vehicle preference settings synthetic sensor, and the synthetic sensor 114 is a vehicle occupants synthetic sensor. The vehicle preference setting synthetic sensor 112 manages a set of driver preferences for various settings in the vehicle 100, including settings associated with an HVAC system, settings associated with ambient light within the vehicle 100, settings associated with a fragrance system in the vehicle 100, settings associated with media playback in the vehicle 100, settings associated with a rearview mirror of the vehicle 100, settings associated with seats of the vehicle 100, settings associated with a human machine interface (HMI) of the vehicle 100, settings associated with a sunroof of the vehicle 100, settings associated with a central lock of the vehicle 100, and/or other settings of the vehicle.

The vehicle preference settings synthetic sensor 112 is able to monitor vehicle signals received through the signal interface 130 to track adjustments of vehicle settings that may have been made, such as by an occupant (a driver or passenger) of the vehicle 100. The vehicle preference settings synthetic sensor 112 can learn from these adjustments and can update preference settings 150 stored in the memory 110. In some examples, the preference settings 150 may be stored in a database or in any other repository of data.

Note that the preference settings 150 can include one or more collections of preference settings that can be associated with one or more drivers (or more generally, one or more occupants) of the vehicle 100. In some examples, for each driver (or more generally, an occupant), different collections of preference settings 150 may be associated with different modes, which can be referred to as "scene modes." Depending upon a scene mode selected, such as by an occupant or another entity in the vehicle 100, a respective collection of preference settings 150 may be employed. Examples of scene modes can include a work commute mode associated with commuting to and from work, a leisure mode associated with leisurely driving, or other modes.

For a given combination of an occupant (e.g., a driver) and a scene mode, the vehicle preference settings synthetic sensor 112 can track any adjustments of preference settings made by the occupant. The vehicle preference settings synthetic sensor 112 can update the respective collection of preference settings 150 in the memory 110 based on the tracked adjustments. At a later time, the updated collection of preference settings 150 is used for the same occupant when the same scene mode is selected.

The vehicle occupants synthetic sensor 114 is able to detect and identify occupants, including the driver and any passengers, in the vehicle 100. The vehicle occupants synthetic sensor 114 can communicate an occupant identification (152) to the vehicle preference setting synthetic sensor 112, which can use the occupant identification to update preference settings for the identified occupant. An occupant identification can include one or more identifiers of occupants, such as using names of occupants or using numeric or alphanumeric identifiers of occupants.

The vehicle preference settings synthetic sensor 112 can track preferences of the driver (and possibly any other occupant), which can influence operation of actuatable components of the vehicle 100. An "actuatable component" can refer to any component in the vehicle 100 that can be actuated between different operational settings. An actuatable component can refer to a hardware actuatable component or a software actuatable component. Actuatable components can be present in any of the following systems of the vehicle 100: an HVAC system that controls cooling, heating, and fan speed in the vehicle cabin; a navigation system; a fragrance dispensing system that dispenses a fragrance into the vehicle cabin; control systems that control the vehicle's external lights and the vehicle's horn; an HMI that presents a user interface that displays information and accepts user inputs; a seat control system that can control positions of a seat and other seat features, such as a massage feature; a rearview mirror control system; a sunroof control system; a vehicle ambient light control system; a media control system that plays media such as music; a driver assistance system; and so forth.

Outputs of the synthetic sensors 112 and 114 can be provided to an insights interface 134. The insights interface 134 can provide insights based on outputs of the synthetic sensors 112 and 114 to other modules in the vehicle 100. An "insight" can include data derived by processing vehicle signals, such as by the synthetic sensors 112 and 114. The insights interface 134 may relay insights from the synthetic sensors 112 and 114 to other modules, including an application program 118 and a scene engine 120. In some examples, the insights interface 134 can apply a further computation based on an output of a synthetic sensor to produce an insight.

The scene engine 120 can subscribe to insights provided by the vehicle preference setting synthetic sensor 112 (and possibly also the vehicle occupants synthetic sensor 114). For a selected scene mode for a given driver, the scene engine 120 can obtain, from the preference setting synthetic sensor 112, a collection of preference settings 150 for the selected scene mode and the given driver. The scene engine 120 is able to adjust settings of various actuatable components based on the preference settings 150 returned by the vehicle preference setting synthetic sensor 112.

The application program 118 can be a control program of the vehicle 100 that can control an operation of the vehicle 100. For example, the application program 118 may be part of an autonomous driving system of the vehicle 100 that can control various operational aspects of the vehicle 100, including the speed of the vehicle 100, and other operational aspects of the vehicle 100. In some examples, the application program 118 can receive insights from the synthetic sensors 112 and 114, or can receive outputs of the scene engine 120. The application program 118 can interact with a vehicle controller 136 of the vehicle 100 to control a speed of the vehicle 100 based on outputs of the scene engine 120 or the synthetic sensors 112 and 114.

The vehicle 100 is also able to communicate over a network 140 with a remote server 142. For example, the vehicle 100 can include a communication subsystem 144 that includes a signal transceiver and protocol layers to communicate over the network 140. The server 142 can be part of a cloud computing environment, a data center, or any other type of computing environment.

Although FIG. 1 shows an example in which synthetic sensors in the vehicle 100 consume the vehicle signals 106, in other examples, other types of programs in the vehicle can consume the vehicle signals 106. In further examples, an external entity, such as a program in the server 142 can consume the vehicle signals 106, which may be communicated over the network 140 to the server 142.

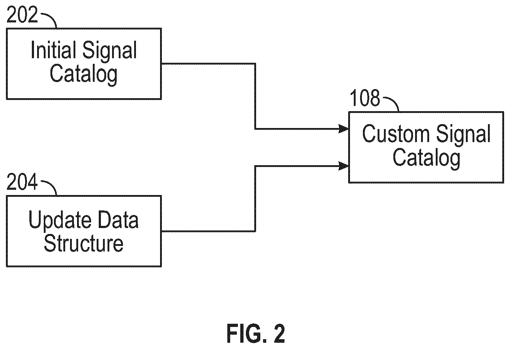

As shown in FIG. 2, the custom signal catalog 108 is derived based on an initial signal catalog 202 and an update data structure 204 (or multiple update data structures). The initial signal catalog 202 may conform to a given version of a signaling protocol, such as the VSS protocol. The update data structure(s) 204 when applied to the initial signal catalog 202 adds additional vehicle signals that are not defined by the initial signal catalog 202. An update data structure 204 may be an overlay structure, such as an overlay file according to the VSS protocol. The update data structure(s) 204 and the initial signal catalog 202 can be combined to produce the custom signal catalog 108. The combining of the initial signal catalog 202 and one or more update data structures 204 may be performed by an entity that is outside the vehicle 100. The external entity (e.g., the server 142) can produce the custom signal catalog 108 and transmit the custom signal catalog 108 to the vehicle 100 (such as over the network 140) for storage in the memory 110. In other examples, an entity (e.g., a program or a hardware processing resource) inside the vehicle 100 can combine the initial signal catalog 202 and the one or more update data structures 204 to produce the custom signal catalog 108.

As used here, a "processing resource" can refer to one or more hardware processors. A hardware processor can include a microprocessor, a core of a multicore microprocessor, a microcontroller, a programmable integrated circuit, a programmable gate array, or another hardware processing circuit.

In examples where the initial signal catalog 202 is a VSS catalog, the VSS catalog can be implemented with one or more specification files. A specification file of a VSS catalog is referred to as a "VSPEC file." A VSPEC file is according to the YAML Ain't Markup Language (YAML), for example.

Making changes to source material (one or more VSPEC files) of a VSS catalog may trigger a requirement in the Mozilla Public License Version 1 (MPL V1) for distributing modified source material to others. This may not be desirable under certain circumstances.

Instead of making changes to the source material of a VSS catalog, the VSS also provides an overlay mechanism that allows changes or additions to be made with respect to the VSS catalog, without changing the source material of the VSS catalog. The overlay mechanism supports the creation of one or more overlay files (which themselves are VSPEC files) that contain instructions specifying changes to nodes of a VSS catalog, or specifying additions of nodes that are not present in the VSS catalog. An overlay file can be used to specify the addition of new nodes that represent new vehicle signals.

A converter (e.g., inside the server 142 or inside the vehicle 100) can combine the VSS catalog with one or more overlay files to produce an output representation (e.g., the custom signal catalog 108) in a different format, such as any of the following: a JavaScript Object Notation (JSON) format, Interface Definition Language (IDL) format, or any other format. The converter can be a VSS tool that is provided as one of the tools associated with the VSS.

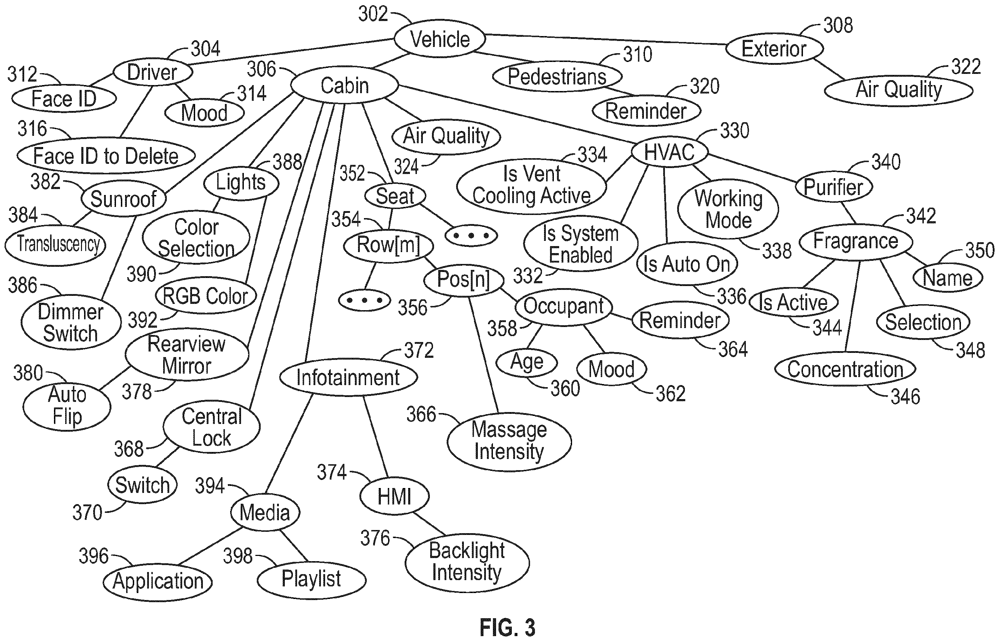

FIG. 3 is a graph of an example of the custom signal catalog 108, which includes a hierarchical arrangement of nodes representing respective features of the vehicle 100. Note that in other examples, a different hierarchical arrangement of nodes can be employed. Note that any node indicated as being a sensor node in FIG. 3 may alternatively be an actuator or attribute node. Also, various vehicle signals are indicated as settable to a "0" or "1" value. In other examples, such vehicle signals may alternatively be set to false or true.

A root node 302 represents the vehicle 100. Various nodes can depend from the root node 302 in the hierarchical arrangement of nodes. A first node "depends" from a second node in the hierarchical arrangement of nodes if the first node is connected to the second node and is at a lower hierarchical level in the hierarchical arrangement than the second node. The root node 302 is at the highest hierarchical level in the hierarchical arrangement.

Nodes depending from the root node 302 include the following branch nodes: a driver branch node 304 that represents a driver of the vehicle 100, a cabin branch node 306 that represents a cabin of the vehicle 100, an exterior branch node 308 that represents an exterior of the vehicle 100, and a pedestrians branch node 310 that represents one or more pedestrians proximate the vehicle 100.

Nodes that depend from the driver branch node 304 include a face identifier (ID) sensor node 312 that represents a face ID based on facial recognition of the driver of the vehicle 100 as performed by a facial recognition system of the vehicle 100. One or more cameras of the vehicle 100 can capture images of the driver's face, and the facial recognition system can perform facial recognition based on an analysis of the captured images.

A mood sensor node 314 also depends from the driver branch node 304, and represents a mood of the driver. The mood of the driver may be derived by the facial recognition system based on image processing of the images of the driver's face. Another sensor node 316 depending from driver branch node 304 represents a face ID to delete (such as in response to a request from a user or another entity to delete the face ID of a specified driver).

The face ID sensor node 312 can be expressed as an example vehicle signal, Vehicle.Driver.FaceID, which can include a name of the driver or another numeric or alphanumeric identifier of the driver. The mood sensor node 314 can be expressed as an example vehicle signal, Vehicle. Driver. Mood which can have one of several discrete values to represent the mood of the driver, such as "Default" (indicating a default mood), "Happy" (indicating that the driver is happy), "Sad" (indicating that the driver is sad), or "Unknown" (indicating that the driver's mood is unknown).

The sensor node 316 representing a face ID to delete can be expressed as an example vehicle signal, Vehicle.Driver.FaceIDToDelete, which is set to the face ID of a driver that is to be deleted.

A consumer of the Vehicle.Driver.FaceID, Vehicle. Driver. Mood, and Vehicle.Driver.FaceIDToDelete vehicle signals may be the vehicle occupants synthetic sensor 114. In further examples, the vehicle preference settings synthetic sensor 112 may also be a consumer of these vehicle signals relating to a driver. For example, preference settings 150 may be adjusted based on the identification of the driver and based on the mood of the driver. In some cases, the preference settings of the driver whose face ID to be deleted will be removed from preference settings 150.

A reminder sensor node 320 depends from the pedestrians branch node 310, to indicate whether any pedestrian is proximate the vehicle 100, and if so, the type of pedestrian. The presence of a pedestrian can be detected using one or more external facing cameras of the vehicle 100. A monitoring agent can process the images acquired by such camera(s) to determine whether or not a pedestrian is present, and if so, the monitoring agent can make a determination of whether the pedestrian is an adult, a child, or a pet. The reminder sensor node 320 can be expressed as an example vehicle signal, Vehicle. Pedestrians. Reminder, which can have the following example values: "None" (to indicate no pedestrian detected), "Adult" (to indicate that an adult pedestrian is detected), "Child" (to indicate that a child pedestrian is detected), and "Pet" (to indicate that an animal is detected).

A consumer of the Vehicle. Pedestrians. Reminder vehicle signal may be either of the synthetic sensors 112 and 114, or another synthetic sensor. The scene engine 120 or the application program 118 can receive an insight from the synthetic sensor indicating the detection of the pedestrian, and the scene engine 120 or the application program can trigger an action based on the pedestrian detection, such as by flashing the vehicle's headlights, honking the vehicle's horn, or reducing the vehicle speed.

An air quality sensor node 322 depends from the exterior branch node 308. The air quality sensor node 322 can be expressed as an example vehicle signal, Vehicle.Exterior.AirQuality, which can be set to any of various values indicating respective different air qualities outside the vehicle 100. The exterior air quality can be detected using an air quality sensor of the vehicle 100 that is able to measure a property (e.g., such as a concentration of particulates) in the air surrounding the vehicle 100.

Various different nodes can depend from the cabin branch node 306. An air quality sensor node 324 depends from the cabin branch node 306. The air quality sensor node 324 can be expressed as an example vehicle signal, Vehicle.Cabin.AirQuality, which can be set to one of various different values to represent respective different air qualities within the vehicle cabin. The air quality inside the vehicle cabin can be based on measurements acquired by an air quality sensor within the vehicle cabin.

A consumer of the Vehicle.Exterior.AirQuality and Vehicle.Cabin.AirQuality vehicle signals may be the vehicle preference settings synthetic sensor 112 or another synthetic sensor. Based on insights from the synthetic sensor, the scene engine 120 or the application program can trigger an action based on the detected air quality, such as to turn on an HVAC system or an air filter system that may include a filter to filter out poor quality air.

Another node that depends from the cabin branch node 306 is an HVAC branch node 330 that represents an HVAC system of the vehicle 100. The following sensor nodes depend from the HVAC branch node 330: a sensor node 332 indicating whether the HVAC system of the vehicle 100 is enabled, a sensor node 334 indicating whether ventilation and/or cooling is active in the vehicle 100, a sensor node 336 indicating whether the automatic mode of the HVAC system is on, and a sensor node 338 indicating a working mode and conditioning strength of the HVAC system.

The sensor node 332 can be expressed as an example vehicle signal, Vehicle.Cabin.HVAC.IsSystemEnabled, which can have a first value (e.g., "1") to indicate that the HVAC system is enabled, and a different second value (e.g., "0") to indicate that the HVAC system is disabled.

The sensor node 334 can be expressed as an example vehicle signal, Vehicle.Cabin.HVAC.IsVentilationCoolingActive, which can have a first value (e.g., "1") to indicate that ventilation and/or cooling is active, and a second value (e.g., "0") to indicate that ventilation and cooling are inactive.

The sensor node 336 can be expressed as an example vehicle signal, Vehicle.Cabin.HVAC.IsAutoOn, which can be set to a first value (e.g., "1") to indicate that the automatic mode of the HVAC system is on, and a second value (e.g., "0") to indicate that the automatic mode of the HVAC system is off.

The sensor node 338 can be expressed as an example vehicle signal, Vehicle.Cabin.HVAC.WorkingMode, which can be set to one of the following values: "No Request" (indicating no request has been issued to set the working mode of the HVAC system), "Gentle" (indicating that the requested working mode is gentle), "Normal" (indicating that the requested working mode is normal), and "Strong" (indicating that the requested working mode is strong).

A consumer of the Vehicle.Cabin.HVAC.IsSystemEnabled, Vehicle.Cabin.HVAC.IsVentilationCoolingActive, Vehicle.Cabin.HVAC.IsAutoOn, and Vehicle.Cabin.HVAC.WorkingMode vehicle signals may be the vehicle preference settings synthetic sensor 112, which can track these vehicle signals and update preference settings (e.g., 150) if applicable.

A node that depends from the HVAC branch node 330 is a purifier branch node 340 that represents the purifier system of the vehicle 100. A fragrance branch node 342 depends from the purifier branch node 340 and represents the fragrance system of the vehicle 100 that is able to deliver a fragrance into the vehicle cabin. The following sensor nodes depend from the fragrance branch node 342: a sensor node 344 that represents whether the fragrance system is active, a concentration sensor node 346 that represents a concentration of a fragrance, a fragrance selection sensor node 348 that represents a selection of the fragrance (from among multiple selection channels, for example), and a fragrance name sensor node that represents a name of the fragrance.

The sensor node 344 can be expressed as an example vehicle signal, Vehicle.Cabin.Purifier.Fragrance.IsActive, which can have a first value (e.g., "1") to indicate that the fragrance system is active, and a second value ("0") to indicate that the fragrance system is inactive. The sensor node 346 can be expressed as an example vehicle signal, Vehicle. Cabin. Purifier. Fragrance. Concentration, which can be set to one of various different values to represent the concentration of the fragrance dispensed by the fragrance system into the vehicle cabin. The Vehicle. Cabin. Purifier. Fragrance. Concentration vehicle signal can have discrete values such as "Light," "Rich," and "Fragrant." In other examples, the fragrance concentration signal can have numerical values to represent different concentrations of the fragrance.

The sensor node 348 can be expressed as an example vehicle signal, Vehicle. Cabin. Purifier. Fragrance. Selection, which can be set to a value to indicate which fragrance channel was selected. The sensor node 350 can be expressed as an example vehicle signal, Vehicle. Cabin. Purifier. Fragrance. Name, which can be set to an alphanumeric value (or a numeric value) to represent the name of the fragrance.

A consumer of the Vehicle.Cabin.Purifier.Fragrance.IsActive, Vehicle. Cabin. Purifier. Fragrance. Concentration, Vehicle. Cabin. Purifier. Fragrance. Selection, Vehicle. Cabin. Purifier. Fragrance. Name vehicle signals may be the vehicle preference settings synthetic sensor 112, which can track these vehicle signals and update preference settings (e.g., 150) if applicable.

A seat branch node 352 depends from the cabin branch node 306, and represents seats of the vehicle 100. A Row[m] branch node 354 depends from the seat branch node 352. The Row[m] branch node 354 represents a row of seats. If the vehicle 100 has multiple rows of seats, then there would be multiple Row[m] branch nodes that depend from the seat branch node 352.

A Pos[n] branch node 356 depends from the Row[m] branch node 354. The Pos[n] branch node 356 represents the seat position in a given row of seats in the vehicle 100. For example, in the first row, there may be two seat positions: the seat position of the driver and the seat position of the passenger. The second row of seats may include three seat positions. Similarly, if there is a third row of seats, the third row of seats may include two or more seat positions. In a row with multiple seat positions, there would be multiple Pos[n] branch nodes depending from the Row[m] branch node 354.

An occupant branch node 358 depends from the Pos[n] branch node 356, and represents an occupant (a driver or a passenger) in the vehicle 100 at the seat position and row represented by the branch nodes 354 and 356.

The following sensor nodes depend from the occupant branch node 358: a sensor node 360 that represents the age of the occupant, a mood sensor node 362 that represents the mood of the occupant, and a reminder sensor node 364 that provides a reminder that an article has been left behind in the vehicle 100 by the occupant. The age and mood of the occupant can be derived by a monitoring agent that can apply image processing based on images acquired by one or more cameras in the vehicle 100. The reminder sensor node 364 can be based on a detection that an article has been left behind by the occupant, and can be based on a weight sensor that detects a weight at a seat position, or images of the vehicle cabin acquired by cameras.

The age sensor node 360 can be expressed as an example vehicle signal, Vehicle.Cabin.Seat.Row[m].Pos[n].Occupant.Age, which can be set to a numerical value representing the age of the occupant. In some cases, it can be set to "adult" or "child".

The mood sensor node 362 can be expressed as an example vehicle signal, Vehicle.Cabin.Seat.Row[m].Pos[n].Mood, which can be set to various different values to represent the mood of the occupant. The reminder sensor node can be expressed as an example vehicle signal, Vehicle.Cabin.Seat.Row[m].Pos[n].Reminder, which can be set to one of the following values: "None" (indicating no article left behind), "People" (indicating a person such as a child was left behind), "Wallet" (indicating a wallet was left behind), and "Pet" (indicating a pet was left behind).

A consumer of the Vehicle.Cabin.Seat.Row[m].Pos[n].Occupant.Age, Vehicle.Cabin.Seat.Row[m].Pos[n].Mood, and Vehicle.Cabin.Seat.Row[m].Pos[n].Reminder vehicle signals may be the vehicle preference settings synthetic sensor 112, the vehicle occupants synthetic sensor 114, or another synthetic sensor. Based on insights from the synthetic sensor, the scene engine 120 or the application program can trigger an action (e.g., a safety reminder or warning) based on the detected occupant age and moot, or an action (e.g., sounding a horn or sending a text message or email) based on detecting that an article was left behind. As another example, preference settings 150 may be adjusted based on the identification of the driver and based on the mood of the driver.

A massage intensity sensor node 366 depends from the Pos[n] branch node 356, and represents the intensity of a massage feature of a seat at the position represented by the Row[m] branch node 354 and the Pos[n] branch node 356. The massage intensity sensor node 366 can be expressed as an example vehicle signal, Vehicle.Cabin.Seat.Row[m].Pos[n].Massageintensity, which can be set to various values to represent the intensity of the seat massage feature.

A central lock branch node 368 depends from the cabin branch node 306, and represents a central lock system of the vehicle 100. The central lock system when activated can lock all doors of the vehicle 100 (rather than just individual doors). A switch sensor node 370 depends from the central lock branch node 368, and the switch sensor node 370 represents whether the central lock for activating all door locks of the vehicle 100 is activated. The switch sensor node 370 can be expressed as an example vehicle signal, Vehicle.Cabin.CentralLock.Switch, which can have the following values: "No Command" (indicating that no command has been sent to activate the central lock system), "Unlock" (indicating that the central lock system is unlocked), and "Lock" (indicating that the central lock system is locked). In some cases, if there is a child in the vehicle (e.g., the age node 360 under an occupant node 358 is "child"), the switch node 370 will be set to "Lock" so that the central lock system will be activated to lock all doors for safety.

An infotainment branch node 372 depends from the cabin branch node 306, and represents an infotainment system of the vehicle 100. An HMI branch node 374 depends from the infotainment branch node 372, and represents the HMI of the vehicle 100. A backlight intensity sensor node 376 depends from the HMI branch node 374, and represents the intensity of the backlight for the display of the HMI. The sensor node 376 can be expressed as an example vehicle signal, Vehicle.Cabin.Infotainment.HMI.BacklightIntensity, which can have one of several different values representing respective intensities of the backlight of the HMI.

A rearview mirror branch node 378 depends from the cabin branch node 306, and represents the rearview mirror of the vehicle 100. An auto flip sensor node 380 depends from the rearview mirror branch node 378, to represent an auto flip feature of the rearview mirror. The rearview mirror can be automatically flipped up or down based on detected conditions. For example, if a driver is not recognized by the facial recognition system, then the rearview mirror will not flip down. However, if the driver is recognized, the rearview mirror will flip down to enable use of the rearview mirror. The auto flip sensor node 380 can be expressed as an example vehicle signal, Vehicle.Cabin.RearviewMirror.AutoFlip, which can have the following example values: "No Request" (indicating that no request has been submitted to activate the auto flip feature of the rearview mirror), "Off" (indicating that the auto flip feature of the rearview mirror is off), "On" (indicating that the auto flip feature is on), and "Undefined" (indicating that auto flip feature is currently undefined).

A media branch node 394 depends from the infotainment branch node 372, and represents a media playback system of the vehicle 100. An application sensor node 396 depends from the media branch node 394 to represent the playback application that is used to play media (e.g., music) in the vehicle 100. A playlist sensor node 398 represents the playlist that is currently being played by the media playback application.

The application sensor node 396 can be expressed as an example vehicle signal, Vehicle.Cabin.Infotainment.Media.App, which can be set to the name of the media playback application.

The playlist sensor node 398 can be expressed as an example vehicle signal, Vehicle.Cabin.Infotainment.Media.Playlist, which can be set to an identifier (e.g., name) of a playlist that is currently being played.

A sunroof branch node 382 depends from the cabin branch node 306, to represent the sunroof of the vehicle 100. The sunroof of the vehicle 100 may not be a sunroof that can open and close. Rather, the sunroof may be an electronically controllable translucent layer that can be set to an opaque mode to block light or to a transparent mode to allow light to enter the vehicle cabin. A translucency sensor node 384 depends from the sunroof branch node 382. The translucency sensor node 384 can be expressed as an example vehicle signal, Vehicle.Cabin.Sunroof.Translucency, which can have one of several different values (such as from a range of values) to represent relative translucencies of the sunroof.

A dimmer switch sensor node 386 depends from the sunroof branch node 382, and represents whether the sunroof dimmer switch has been activated; if activated, that allows the translucency of the sunroof to be adjusted. The dimmer switch sensor node 386 can be expressed as an example vehicle signal, Vehicle.Cabin. Sunroof. DimmerSwitch, which can have the following example values: "No Command " (indicating that no command has been submitted to the dimmer switch), "Open" (indicating that the dimmer switch is on), and "Close" (indicating that the dimmer switch is off).

A lights branch node 388 depends from the cabin branch node 306, to represent ambient light in the vehicle cabin. The following sensor nodes depend from the lights branch node 388: a color selection sensor node 390 to select the color of the ambient light, and a red-green-blue (RGB) color sensor node 392 to represent the RGB color of the ambient light. The ambient light selection sensor node can be expressed as an example vehicle signal, Vehicle.Cabin.Lights.AmbientLightColorSelection, which can have one of various different index values to indicate a respective color selection. The RGB color node sensor node 392 can be expressed as an example vehicle signal, Vehicle.Cabin.Lights.AmbientLightColorRGB, which can set an RGB value to indicate the color of the ambient light.

A consumer of the Vehicle.Cabin.Seat.Row[m].Pos[n].MassageIntensity, Vehicle.Cabin.CentralLock.Switch, Vehicle.Cabin.Infotainment.HMI.BacklightIntensity, Vehicle.Cabin.RearviewMirror.AutoFlip, Vehicle.Cabin.Infotainment.Media.App, Vehicle.Cabin.Infotainment.Media.Playlist, Vehicle.Cabin.Sunroof.Translucency, Vehicle.Cabin.Sunroof.DimmerSwitch, Vehicle.Cabin.Lights.AmbientLightColorSelection, Vehicle.Cabin.Lights.AmbientLightColorRGB vehicle signals may be the vehicle preference settings synthetic sensor 112, which can track these vehicle signals and update preference settings (e.g., 150) if applicable.

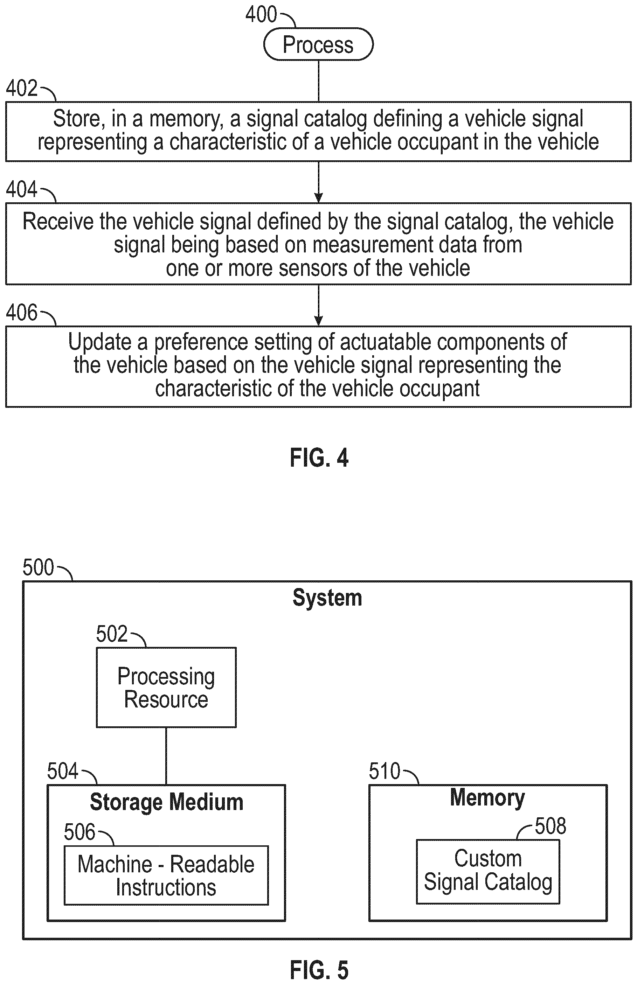

FIG. 4 is a flow diagram of a process 400, which may be performed by a vehicle (e.g., the vehicle 100) or by a computer system (e.g., the server 142) separate from a vehicle.

The process 400 includes storing (at 402), in a memory, a signal catalog defining a vehicle signal representing a characteristic of a vehicle occupant in the vehicle. The vehicle occupant may be a driver or a passenger of the vehicle. The vehicle signal may include a face ID vehicle signal, or a vehicle signal representing a mood or age of the vehicle occupant. The memory may be the memory 110 in the vehicle 100 of FIG. 1. Alternatively, the memory may be external of the vehicle 100, such as in the server 142. The signal catalog may be the custom signal catalog 108 of FIG. 1.

The process 400 includes receiving (at 404) the vehicle signal defined by the signal catalog, the vehicle signal being based on measurement data from one or more sensors of the vehicle.

The process 400 includes updating (at 406) a preference setting of actuatable components of the vehicle based on the vehicle signal representing the characteristic of the vehicle occupant. The preference setting may be a preference setting 150 shown in FIG. 1.

In some examples, the signal catalog further defines a mood vehicle signal relating to a mood of the vehicle occupant, wherein the preference setting of the actuatable components is updated further based on the mood vehicle signal.

In some examples, the signal catalog further defines a face identifier deletion vehicle signal relating to a further identifier based on a face recognition of a further vehicle occupant that is to be deleted from the vehicle. The further identifier is deleted from the memory based on the face identifier deletion signal.

In some examples, the vehicle occupant that is a subject of the face identifier vehicle signal is a driver of the vehicle, and the signal catalog further defines one or more of: a vehicle signal relating to an age of a passenger in the vehicle, a vehicle signal relating to a mood of the passenger, or a vehicle signal relating to a reminder that an article was left behind in the vehicle by the passenger.

In some examples, the signal catalog further defines a pedestrian vehicle signal that relates to a presence of a pedestrian proximate the vehicle.

In some examples, the signal catalog further defines a vehicle signal relating to a central lock system of the vehicle, and the updating of the preference setting includes updating a preference setting relating to the central lock system.

In some examples, the signal catalog further defines a vehicle signal relating to a massage feature of a seat of the vehicle, and the updating of the preference setting includes updating a preference setting relating to the massage feature.

In some examples, the signal catalog further defines a vehicle signal relating to a backlight intensity of an HMI of the vehicle, and the updating of the preference setting includes updating a preference setting relating to the backlight intensity of the HMI.

In some examples, the signal catalog further defines a vehicle signal relating to an auto flip feature of a rearview mirror of the vehicle, and the updating of the preference setting includes updating a preference setting relating to the auto flip feature of the rearview mirror.

In some examples, the signal catalog further defines a vehicle signal relating to a translucency of a sunroof of the vehicle, and the updating of the preference setting includes updating a preference setting relating to the translucency of the sunroof.

In some examples, the signal catalog further defines a vehicle signal relating to a color of an ambient light in a cabin of the vehicle, and the updating of the preference setting includes updating a preference setting relating to the color of the ambient light.

In some examples, the signal catalog further defines a vehicle signal relating to a media application program and a vehicle signal relating to a media playlist, and the updating of the preference setting includes updating a preference setting relating to the media application program and the media playlist.

In some examples, the signal catalog further defines an air quality vehicle signal relating to an exterior and/or interior air quality associated with the vehicle. An HVAC system or an air filter system is activated based on the air quality vehicle signal.

In some examples, the signal catalog further defines a vehicle signal relating to an HVAC system of the vehicle, and the updating of the preference setting includes updating a preference setting relating to the HVAC system of the vehicle.

In some examples, the signal catalog further defines a vehicle signal relating to a fragrance system of the vehicle, and the updating of the preference setting includes updating a preference setting relating to a fragrance provided in the vehicle by the fragrance system.

FIG. 5 is a block diagram of a system 500 according to some examples. The system 500 may be part of a vehicle or may be separate from the vehicle. The system 500 includes a processing resource 502 including one or more hardware processors. The system 500 further includes a non-transitory machine-readable or computer-readable storage medium 504 that stores machine-readable instructions 506 that are executable by the processing resource 502.

The machine-readable instructions 506 can access a custom signal catalog 508 stored in a memory 510 of the system 500. The custom signal catalog 508 defines a vehicle signal representing a characteristic (e.g., an identifier, an age, a mood, etc.) of a vehicle occupant in the vehicle.

The machine-readable instructions 506 can receive the vehicle signal defined by the custom signal catalog 508, and can update a preference setting of actuatable components of the vehicle based on the vehicle signal representing the characteristic of the vehicle occupant.

The storage medium 504 can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory or other type of non-volatile memory device; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the present disclosure, use of the term "a," "an," or "the" is intended to include the plural forms as well, unless the context clearly indicates otherwise. Also, the term "includes," "including," "comprises," "comprising," "have," or "having" when used in this disclosure specifies the presence of the stated elements, but do not preclude the presence or addition of other elements.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A method comprising:
storing, in a memory, a signal catalog defining a face identifier vehicle signal relating to an identifier based on a recognition of a face of a vehicle occupant in a vehicle;
receiving the face identifier vehicle signal defined by the signal catalog; and
updating, by a processing resource, a preference setting of actuatable components of the vehicle based on the face identifier vehicle signal.

2. The method of claim 1, wherein the signal catalog further defines a mood vehicle signal relating to a mood of the vehicle occupant, wherein the preference setting of the actuatable components is updated further based on the mood vehicle signal.

3. The method of claim 1 or 2, wherein the signal catalog further defines a face identifier deletion vehicle signal relating to a further identifier based on a face recognition of a further vehicle occupant that is to be deleted from the vehicle, the method comprising:
deleting, from the memory, the further identifier based on the face identifier deletion vehicle signal.

4. The method according to any one of claims 1 to 3, wherein the vehicle occupant that is a subject of the face identifier vehicle signal is a driver of the vehicle, and the signal catalog further defines one or more of: a vehicle signal relating to an age of a passenger in the vehicle, a vehicle signal relating to a mood of the passenger, or a vehicle signal relating to a reminder that an article was left behind in the vehicle by the passenger.

5. The method according to any one of claims 1 to 4, wherein the signal catalog further defines a pedestrian vehicle signal that relates to a presence of a pedestrian proximate the vehicle.

6. The method according to any one of claims 1 to 5, wherein the signal catalog further defines a vehicle signal relating to a central lock system of the vehicle, and wherein the updating of the preference setting comprises updating a preference setting relating to the central lock system.

7. The method according to any one of claims 1 to 6, wherein the signal catalog further defines a vehicle signal relating to a massage feature of a seat of the vehicle, and wherein the updating of the preference setting comprises updating a preference setting relating to the massage feature; and/or
wherein the signal catalog further defines a vehicle signal relating to a backlight intensity of a human machine interface (HMI) of the vehicle, and wherein the updating of the preference setting comprises updating a preference setting relating to the backlight intensity of the HMI.

8. The method according to any one of claims 1 to 7, wherein the signal catalog further defines a vehicle signal relating to an auto flip feature of a rearview mirror of the vehicle, and wherein the updating of the preference setting comprises updating a preference setting relating to the auto flip feature of the rearview mirror; and/or
wherein the signal catalog further defines a vehicle signal relating to a translucency of a sunroof of the vehicle, and wherein the updating of the preference setting comprises updating a preference setting relating to the translucency of the sunroof.

9. The method according to any one of claims 1 to 8, wherein the signal catalog further defines a vehicle signal relating to a color of an ambient light in a cabin of the vehicle, and wherein the updating of the preference setting comprises updating a preference setting relating to the color of the ambient light; and/or
wherein the signal catalog further defines a vehicle signal relating to a media application program and a vehicle signal relating to a media playlist, and wherein the updating of the preference setting comprises updating a preference setting relating to the media application program and the media playlist.

10. The method according to any one of claims 1 to 9, wherein the signal catalog further defines an air quality vehicle signal relating to an air quality associated with the vehicle, and the method comprises:
activating a heat ventilation and cooling (HVAC) system or an air filter system based on the air quality vehicle signal, wherein, optionally, the air quality vehicle signal relates to the air quality inside the vehicle or the air quality outside the vehicle.

11. The method according to any one of claims 1 to 10, wherein the signal catalog further defines a vehicle signal relating to an HVAC system of the vehicle, and wherein the updating of the preference setting comprises updating a preference setting relating to the HVAC system of the vehicle; and/or
wherein the signal catalog further defines a vehicle signal relating to a fragrance system of the vehicle, and wherein the updating of the preference setting comprises updating a preference setting relating to a fragrance provided in the vehicle by the fragrance system.

12. A vehicle comprising:
a memory to store a signal catalog defining a vehicle signal representing a characteristic of a vehicle occupant in the vehicle;
a plurality of sensors;
a processing resource; and
a non-transitory storage medium storing instructions executable by the processing resource to:
receive the vehicle signal defined by the signal catalog, the vehicle signal being based on measurement data from one or more sensors of the plurality of sensors, and
update, by the vehicle, a preference setting of actuatable components of the vehicle based on the vehicle signal representing the characteristic of the vehicle occupant.

13. The vehicle of claim 12, wherein the signal catalog further defines one or more vehicle signals selected from among: a vehicle signal relating to a central lock system of the vehicle, a vehicle signal relating to a massage feature of a seat of the vehicle, a vehicle signal relating to a backlight intensity of a human machine interface (HMI) of the vehicle, a vehicle signal relating to an auto flip feature of a rearview mirror of the vehicle, a vehicle signal relating to a translucency of a sunroof of the vehicle, a vehicle signal relating to a color of an ambient light in a cabin of the vehicle, a vehicle signal relating to a media application program, a vehicle signal relating to a media playlist, and a vehicle signal relating to a fragrance system of the vehicle.

14. The vehicle of claim 12 or 13, wherein the signal catalog further defines an air quality vehicle signal relating to an air quality associated with the vehicle, and the Instructions are executable by the processing resource to:
activate a heat ventilation and cooling (HVAC) system or an air filter system based on the air quality vehicle signal.

15. A non-transitory machine-readable storage medium storing instructions that upon execution cause a system to:
store, in a memory, a signal catalog defining a vehicle signal representing a characteristic of a vehicle occupant in a vehicle;
receive the vehicle signal defined by the signal catalog, the vehicle signal being based on measurement data from one or more sensors of the vehicle; and
update, by the vehicle, a preference setting of actuatable components of the vehicle based on the vehicle signal representing the characteristic of the vehicle occupant.
